# EUROPÄISCHE PATENTSCHRIFT

(11) **EP 0 879 945 B1**
(45) Veröffentlichungstag und Bekanntmachung des Hinweises auf die Patenterteilung: **03.12.2003**
(21) Anmeldenummer: 98105458.8
(22) Anmeldetag: 26.03.1998
(51) Int. Cl.: F02B 43/00, F02B 45/00, F02B 47/02

(54) **Verfahren zum Betreiben einer Brennkraftmaschine**
Method of operating an internal combustion engine
Procédé pour faire fonctionner un moteur à combustion interne

(30) Priorität: 23.05.1997 DE 19721573
(43) Veröffentlichungstag der Anmeldung: 25.11.1998
(73) Patentinhaber: Posselt, Werner, 87656 Germaringen (DE)
(72) Erfinder: Posselt, Werner, 87656 Germaringen (DE)

(56) Entgegenhaltungen:
- EP-A- 0 718 489
- DE-A- 3 805 009
- GB-A- 2 147 947
- US-A- 4 114 566
- US-A- 5 163 385
- F.ROBBEN: "coal-fueled diesel engines" AUTOMOTIVE ENGINEERING, Bd. 92, Nr. 2, 1. Februar 1984, Seiten 43-45, XP002099149 DALLAS,TEXAS,USA

## Beschreibung

Die Erfindung betrifft ein Verfahren zum Betreiben einer Brennkraftmaschine, mit mindestens einem Zylinder, Luftein- und Gasauslaßventilen und einem Einspritzventil, durch das ein Brennstoffdampf-Wasserdampf-Gemisch unter erhöhtem Druck und erhöhter Temperatur in den Zylinder gelangt und die Erwärmung des Brennstoffdampf-Wasserdampf-Gemisches durch das heiße Motorabgas erfolgt.

Ein derartiges Verfahren ist aus der DE-A-37 34 346 bekannt. Nach diesem bekannten Verfahren werden getrennte Pumpen für die Druckerhöhung der Brennstofflüssigkeit und des Wassers verwendet und das Gemisch wird bei einem Druck oberhalb des Kompressionsenddruckes verdampft. Das Brennstoffdampf-Wasserdampf-Gemisch steht mit etwa 220°C am Einspritzventil bereit. Über die absolute Höhe des Druckes des Brennstoffdampf-Wasserdampf-Gemisches ist in diesem Dokument nichts gesagt.

Die DE-A-39 24 013 beschreibt ein ähnliches Verfahren, das sich von dem Verfahren des vorgenannten Patentes dadurch unterscheidet, daß der Druck des Brennstoffdampf-Wasserdampf-Gemisches kleiner als der maximale Kompressionsdruck im Zylinder bei Vollast ist. Zu diesem Zweck sind die Pumpen für Wasser und den flüssigen Brennstoff so ausgelegt, daß der Druck beim Eintritt in den Verdampfer zwischen 5 und 20 bar einstellbar ist.

Ziel der Vorschläge beider vorgenannter Dokumente ist es, ein Verfahren zur gleichzeitigen Einführung von Brennstoffdampf und Wasserdampf in einen Kolbenmotor zu schaffen, um auf diese Weise den Kraftstoff schon bei Einführung in den Zylinderraum im Dampfzustand zur Verfügung zu haben und nach Mischung mit Verbrennungsluft ein homogenes zündfähiges Gemisch zu erhalten. Dabei ist bekannt, daß der Wasserdampf in der Lage ist, Schadgasanteile, insbesondere NOₓ oder Rußanteile im entstehenden Verbrennungsgas zu verringern. Auch wird der spezifische Brennstoffverbrauch gesenkt.

Die DE-A-42 18 104 schlägt vor, bei einer Kolbenkraftmaschine während des Expansionsvorganges überhitztes Wasser von 375°C bei ca. 223 bar in den Verdichtungsraum einzuspritzen. Das Wasser wird hier also nicht mit dem Brennstoff gemischt, komprimiert und verdampft.

Bekannt ist schließlich auch der Vorschlag, Wasser und Brennstoff abwechselnd bei aufeinander folgenden Arbeitstakten in den Zylinder einzuspritzen, wozu zwei Einspritzventile notwendig sind, mit dem Ziel, eine bessere NOₓ-Bindung durch das kondensierte Wasser zu erreichen. Vorschläge dieser Art finden sich in der DE-A-35 17 177 und der DE-A-31 43 605. Das Problem beim Betreiben eines Kolbenmotors mit einem komprimierten Brennstoffdampf-Wasserdampf-Gemisch ist die zunehmende Klopfneigung durch Selbstzündung des Gemisches, dem man gemäß DE-A-40 35 064 dadurch zu begegnen sucht, daß das Brennstoffdampf-Wasserdampf-Gemisch vor seiner Injektion abgekühlt wird, um wenigstens einen Teil des Brennstoffdampfes und auch einen Teil des Wasserdampfes zu kondensieren. Dieser Vorschlag vermindert wiederum den thermischen Wirkungsgrad der Brennkraftmaschine.

Allen bekannten Vorschlägen ist bei der Zugabe von vernebeltem Wasser oder Wasserdampf das Ziel gemeinsam, Abgasemissionen, insbesondere von Ruß, NO und CO zu verringern. Beim Einspritzen von Brennstoffdampf-Wasserdampf-Gemischen wurden gerade noch solche Drücke und Temperaturen zugelassen, die zur Überhitzung des Dampfgemisches führen, dennoch aber die Klopfneigung des Motors beherrschbar machen sollten.

Aufgabe der Erfindung ist es, ein Verfahren der eingangs genannten Art dahingehend zu verbessern, daß unter Erhalt des Vorteils der Verringerung des Schadstoffausstoßes im Abgas der thermische Wirkungsgrad der Brennkraftmaschine weiter verbessert wird.

Diese Aufgabe wird bei einem Verfahren der gattungsgemäßen Art durch die Maßnahmen des Patentanspruches 1 gelöst. Durch Erhöhung des Pumpenhochdruckes auf mindestens 350 bar und eine Wärmezufuhr des Brennstoffdampf-Wasserdampf-Gemisches im Verdampfer, um das Brennstoffdampf-Wasserdampf-Gemisch auf vorzugsweise über 450°C zu überhitzen, wird erreicht, daß eine chemische Umwandlung des Brennstoffdampf-Wasserdampf-Gemisches in Mischkomponenten stattfindet, die eine andere Molekularstruktur aufweisen als Brennstoff und Wasser im festen bzw. flüssigen Ausgangszustand. Die verdampften Komponenten werden wenigstens zum Teil in Gase umgewandelt, die ihren gasförmigen Aggregatzustand auch bei normalen atmosphärischen Bedingungen beibehalten. Durch den Zerfall der großen Moleküle der Mischkomponenten in eine Anzahl neuer chemischer Verbindungen mit kleinerer Molekularstruktur wird der Energieinhalt des Druckgasgemisches bzw. Gas-Dampf-Gemisches im Zylinder erhöht. Dieser Gewinn und der von Haus aus höhere thermodynamische Wirkungsgrad aufgrund des stark überhitzten Hochdruck-Brennstoffdampf-Wasserdampf-Gemisches erhöht den Wirkungsgrad einer erfindungsgemäß betriebenen Brennkraftmaschine mindestens um fünf bis acht Prozentpunkte.

Das erfindungsgemäße Verfahren kann bei Brennkraftmaschinen mit Selbstzündung oder auch Fremdzündung angewendet werden. Es versteht sich, daß in der Startphase der Brennkraftmaschine reiner Brennstoff eingespritzt wird. Ein zusätzliches Zündmittel kann für die Startphase vorteilhaft sein. Erst nach Erreichen des Betriebszustandes findet die Bereitstellung des hoch überhitzten, hochgespannten Brennstoffdampf-Wasserdampf-Gemisches statt.

Die Erfindung betrifft weiterhin eine Brennkraftmaschine mit mindestens einem Zylinder, Luftein- und Gasauslaßventilen und einer Abgasleitung, mindestens einem Einspritzventil, einer Pumpeneinrichtung, die flüssigen Brennstoff und Wasser unter Druck zum Einlaßventil fördert und einer Verdampfungseinrichtung, die dieses Gemisch verdampft, bevor es das Einspritzventil erreicht, wobei die Verdampfungseinrichtung mit der Abgasleitung im Wärmeaustausch steht.

Das Neue der Maschine besteht darin, daß die Pumpeinrichtung eine Brennstoffdosierpumpe und eine Wasserdosierpumpe umfaßt, daß die Auslässe beider Pumpen in eine Mischkammer führen, in der die Brennstofflüssigkeit und das Wasser gemischt werden, daß an die Mischkammer eine Hochdruckpumpe angeschlossen ist, die das Flüssigkeitsgemisch auf einen Druck von mindestens 350 bar pumpt und daß der Hochdruckpumpe die Verdampfungseinrichtung nachgeschaltet ist, in der das Flüssigkeitsgemisch verdampft und das Brennstoffdampf-Wasserdampf-Gemisch bei einer Temperatur von mindestens etwa 450°C unter Veränderung seiner molekularen Zusammensetzung am Einspritzventil bereitsteht.

Die erfindungsgemäß verwendbaren Brennstoffe müssen nicht notwendigerweise Dieselöle sein, denn das neue Verfahren erlaubt die Verwertung beliebiger flüssiger aber auch fester Brennstoffe, indem diese alternativ oder kumulativ zum Dieselöl und zum Wasser der Hochdruckpumpe zugeführt werden. So können Pflanzenöle, ölhaltige Farben, Altöl, Schmieröl und dergl. genauso verwertet werden wie pulverige Feststoffe, insbesondere Holzmehl. Die Feststoffe werden vorzugsweise mit Flüssigkeit zu einer breiigen Ausgangsmasse aufgearbeitet, die dann mittels einer Dosierpumpe der Hochdruckpumpe zugeführt wird.

Besonders vorteilhaft lassen sich als Brennmaterialien Kunststoffe verwenden, die durch den hohen Druck und die Temperatur in organische Grundbausteine, insbesondere Kohlenwasserstoffe zerlegt werden. Der Energieinhalt dieser Brennstoffe wird durch das erfindungsgemäße Verfahren mit einem weitaus besseren Wirkungsgrad ausgenutzt, als dies bisher möglich war.

Die Steuerung des Einspritzventils erfolgt in herkömmlicher Technik in Abhängigkeit vom Leistungsbedarf. Für die Steuerung der Dosierpumpen zur Bereitstellung des Brennstoffdampf-Wasserdampf-Gemisches wird ein Rechner benötigt, der den jeweiligen Energieinhalt der Brennstoffe pro Volumeneinheit ermittelt und daraus den Durchflußwert errechnet, um die jeweilige Dosierpumpe entsprechend anzusteuern.

Das erfindungsgemäße Verfahren wird zwar vorzugsweise bei ventilgesteuerten Brennkraftmaschinen angewendet, ist jedoch prinzipiell ebenso für Zweitaktmotoren mit Überströmventilen anwendbar.

Es versteht sich, daß der Wirkungsgrad des Brennkraftmaschinenprozesses umso größer ist, je höher das ggf. mit Feststoffteilchen angereicherte Dampf-Gas-Gemisch beim Eintritt in den Zylinder temperiert ist. Bei entsprechender Größe und Ausstattung des Abgas-Wärmetauschers, läßt sich eine Temperatur des Dampf-Gas-Gemisches an der Einspritzdüse von über 450°C erreichen. Temperaturen von über 500°C sind jedoch durchaus möglich. Allerdings müssen dann herkömmliche Materialien für Zylinder, Kolben und Ventile durch hitzebeständige Bauteile ersetzt werden.

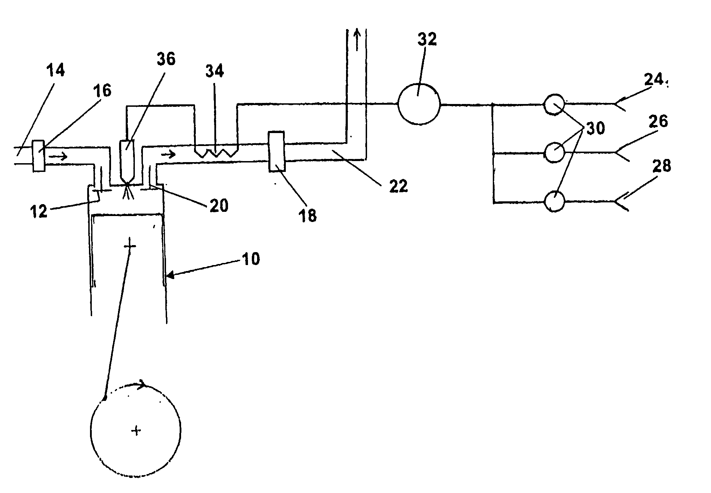

Anhand der Zeichnung, die ein Ausführungsbeispiel schematisch darstellt, wird die Erfindung näher beschrieben.

Die einzige Figur zeigt ein Strömungsschaltbild für die Komponenten eines Brennkraftmaschinenprozesses.

Eine allgemein mit 10 bezeichnete Brennkraftmaschine weist in ihrem Zylinderkopf ein Lufteinlaß-Ventilsystem 12 auf, das durchaus mehrere Ventile umfassen kann. Die in das Luftzuführungssystem 14 eintretende Verbrennungsluft wird durch einen Turboladerkompressor 16 komprimiert, der durch eine Abgasturbine 18 angetrieben wird. Ein Abgasventilsystem 20, das ebenfalls ein oder mehrere Einzelventile aufweisen kann, führt die heißen Abgase von etwa 700°C in das Abgassystem 22, das - wie gesagt - die Abgasturbine 18. enthält. Das Abgassystem 22 kann einen Kondensator zur Rückgewinnung von Wasser sowie auch einen Zyklonfilter aufweisen. Die soweit beschriebene Brennkraftmaschine 10 ist herkömmlicher Bauart.

Bei der neuen Maschine sind nun schematisch dargestellte Vorrattanks 24 für z.B. Dieselöl, 26 für Wasser und ggf. rückgewonnenes Kondensat und 28 für Brennstoffpulverbrei vorgesehen. Jedem dieser Vorrattanks 24-28 ist eine Dosierpumpe 30 zugeordnet. Die Pumpen 30 werden rechnergestützt angesteuert, um durch Einzelmengenzugabe ein richtiges Mischungsergebnis sicherzustellen. Die Dosierpumpen 30, die nicht notwendigerweise alle gleichzeitig in Betrieb sein müssen, pumpen das Flüssigkeitsgemisch oder Flüssigkeitsfestkörpergemisch zur Einlaßseite einer Hochdruckpumpe 32. Der Hochdruckpumpe 32 kann noch eine Mischeinrichtung vorgeschaltet sein, die für ausreichende Homogenität der Mischung sorgt. Die Hochdruckpumpe 32 erhöht den Druck der Mischung auf etwa 350 bar. Die Mischung wird dann durch einen Wärmetauscher 34 gefördert, der im Abgassystem 22 eingebaut ist. Im Wärmeaustauscher 34 wird die Mischung verdampft bzw. vergast und auf eine Temperatur von ca. 450°C gebracht. In diesem überhitzten Zustand findet eine molekulare Umwandlung des Brennstoffdampf-Wasserdampf-Gemisches statt, wodurch neue Komponenten mit insbesondere kleinerer Molekularstruktur entstehen. Diese Gase bleiben auch nach der Entspannung bei normalen atmosphärischen Umweltbedingungen gasförmig. Das überhitzte, hochkomprimierte, mindestens zum Teil thermisch dissoziierte Gas- bzw. Dampf-Gas-Gemisch wird nun durch ein mechanisch, hydraulisch oder elektrisch gesteuertes Einspritzventil 36 in die Brennkammer der Brennkraftmaschine 10 eingespritzt.

Beim Start der Maschine fördern die Dosierpumpen 30 für Wasser und Brennstoffpulverbrei nicht. Lediglich die Dosierpumpe 30 für Brennöl versorgt die Hochdruckpumpe 32. Das Öl wird als Flüssigkeit durch das Einspritzventil 36 in den Brennraum eingespritzt. Nach einer kurzen Betriebszeit ist der Wärmeaustauscher 34 in der Lage, das von der Hochdruckpumpe 32 geförderte Medium zu vergasen bzw. zu verdampfen. Sobald eine ausreichend hohe Abgastemperatur am Wärmeaustauscher 34 gemessen wird, beginnt die Arbeitsbetriebsphase und es wird die Dosierpumpe 30 zur Förderung aus dem Wasservorrat 26 aktiviert, wobei ein ganz bestimmtes Mischungsverhältnis von Öl zu Wasser eingehalten werden muß. Gleichzeitig kann die Pumpe 30 für den Feststoffpulverbrei gestartet werden, was mit einer entsprechenden Reduzierung der Pumpe 30 für den Ölvorrat 24 einhergeht. Die Pumpe 30 für den Ölvorrat kann auch ganz abgeschaltet werden, sodaß dann als alleiniger Brennstoff der Pulverbrei verwendet wird.

Es versteht sich, daß die Vorrattankstation noch weitere Vorrattanks mit eigenen Dosierpumpen 30 aufweisen kann, um diverse weitere energiehaltige flüssige bzw. breiige Abfallstoffe auf Vorrat zu halten. Wichtig ist, daß jedem Vorratstank ein eigenes Dosierventil zugeordnet ist, da der mittlere Energieinhalt des jeweils gespeicherten Mediums ermittelt werden muß und in dessen Abhängigkeit die Dosierpumpe eine genau dosierte Menge des Mediums pro Zeiteinheit als Mischkomponente bereitstellt.

Anstelle einzelner Dosierpumpen 30 für jeden Brennstoffpulverbrei enthaltenden Vorrattank 28 können auch mehrere Vorrattanks 28 zu einer Gruppe zusammengefaßt sein, der lediglich eine Dosierpumpe 30 zugeordnet ist. Die Vorrattanks benötigen dann je ein fernsteuerbares Absperrventil.

## Patentansprüche

1. Verfahren zum Betreiben einer Brennkraftmaschine mit mindestens einem Zylinder, Luftein- und Gasauslaßventilen und einer Abgasleitung, mindestens einem Einspritzventil, einer Pumpeneinrichtung, die flüssigen Brennstoff und Wasser unter Druck zum Einlaßventil fördert und einer Verdampfungseinrichtung, die dieses Gemisch verdampft, bevor es das Einspritzventil erreicht, wobei die Verdampfungseinrichtung mit der Abgasleitung im Wärmeaustausch steht, **dadurch gekennzeichnet, daß** das Brennstoffdampf-Wasserdampf-Gemisch unter einem Druck von mindestens 350 bar und einer Temperatur von mindestens etwa 450°C steht, wodurch der Brennstoffdampf gegenüber seinem festen oder flüssigen Ausgangszustand unter Änderung seiner Molekularstruktur in ein Gemisch organischer Gase umgewandelt wird, das unter normalen Umgebungsbedingungen wenigstens teilweise flüchtig ist.

2. Verfahren nach Anspruch 1, **dadurch gekennzeichnet, daß** der Brennstoffdampf wenigstens zum Teil aus einem Feststoffbrei gewonnen wird.

3. Brennkraftmaschine mit mindestens einem Zylinder, Luftein- und Gasauslaßventilen und einer Abgasleitung, mindestens einem Einspritzventil, einer Pumpeneinrichtung, die flüssigen Brennstoff und Wasser unter Druck zum Einspritzventil fördert und einer Verdampfungseinrichtung, die dieses Gemisch verdampft, bevor es das Einspritzventil erreicht, wobei die Verdampfungseinrichtung mit der Abgasleitung im Wärmeaustausch steht, **dadurch gekennzeichnet, daß** die Pumpeinrichtung eine Brennstoffdosierpumpe (30) und eine Wasserdosierpumpe (30) umfaßt, daß die Auslässe beider Pumpen (30, 30) in eine Mischkammer führen, in der die Brennstofflüssigkeit und das Wasser gemischt werden, daß an die Mischkammer eine Hochdruckpumpe (32) angeschlossen ist, die das Flüssigkeitsgemisch auf einen Druck von mindestens 350 bar pumpt und daß der Hochdruckpumpe (32) die Verdampfungseinrichtung (34) nachgeschaltet ist, in der das Flüssigkeitsgemisch verdampft und das Brennstoffdampf-Wasserdampf-Gemisch bei einer Temperatur von mindestens etwa 450°C unter Veränderung seiner molekularen Zusammensetzung am Einspritzventil (36) bereitsteht.

## Claims

1. A method for operating an internal combustion engine with at least one cylinder, air-inlet and gas-exhaust valves and an exhaust-gas pipe, at least one injection valve, pump means which convey liquid fuel and water under pressure to the inlet valve, and evaporating means which evaporate this mixture prior to its arrival at the injection valve, whereby the evaporating means are in heat exchange with the exhaust-gas pipe, **characterised in that** the fuel vapour-water vapour mixture is under a pressure of at least 350 bar and at a temperature of at least approx. 450 °C, as a result of which the fuel vapour, compared with its initial solid or liquid state, is converted into a mixture of organic gases having changed its molecular structure, said mixture being at least partially volatile under standard atmospheric conditions.

2. The method according to claim 1, **characterised in that** the fuel vapour is obtained at least in.part from a solid matter slurry.

3. An internal combustion engine with at least one cylinder, air-inlet and gas-exhaust valves and an exhaust-gas pipe, at least one injection valve, pump means which convey liquid fuel and water under pressure to the injection valve, and evaporating means which evaporate this mixture prior to its arrival at the injection valve, whereby the evaporating means are in heat exchange with the exhaust-gas pipe, **characterised in that** the pump means comprise a fuel metering pump (30) and a water metering pump (30), that the outlets of the two pumps (30, 30) lead to a mixing chamber, in which the fuel liquid and the water are mixed, that there is connected to the mixing chamber a high-pressure pump (32) which pumps the liquid mixture to a pressure of at least 350 bar and that the high-pressure pump (32) is connected downstream of the evaporating means. (34) in which the liquid mixture evaporates and the fuel vapour-water vapour mixture is available at the injection valve (36) at a temperature of at least 450 °C having changed its molecular composition.

## Revendications

1. Procédé pour faire fonctionner un moteur à combustion interne, comportant au moins un cylindre, des soupapes d'admission et d'échappement d'air et une canalisation de gaz d'échappement, au moins une soupape d'injection, un dispositif de pompage, qui transporte du combustible liquide et de l'eau sous pression vers la soupape d'admission et un dispositif de vaporisation qui vaporise ce mélange avant qu'il n'atteigne la soupape d'injection, le dispositif de vaporisation étant en échange thermique avec la canalisation de gaz d'échappement, **caractérisé en ce que** le mélange vapeur de combustible-vapeur d'eau se trouve sous une pression d'au moins 350 bar et à une température d'au moins environ 450 °C, ce qui transforme la vapeur de combustible par rapport à son état initial solide ou liquide en modifiant sa structure moléculaire en un mélange de gaz organiques qui est du moins partiellement volatil dans des conditions environnementales normales.

2. Procédé selon la revendication 1, **caractérisé en ce que** la vapeur de combustible est obtenue du moins en partie à partir d'une bouillie de matière solide.

3. Moteur à combustion interne comportant au moins un cylindre, des soupapes d'admission et d'échappement d'air et une canalisation de gaz d'échappement, au moins une soupape d'injection, un dispositif de pompage, qui transporte du combustible liquide et de l'eau sous pression vers la soupape d'injection et un dispositif de vaporisation qui vaporise ce mélange avant qu'il n'atteigne la soupape d'injection, le dispositif d vaporisation étant en échange thermique avec la canalisation de gaz d'échappement, **caractérisé en ce que** le dispositif de pompage comprend une pompe de dosage de combustible (30) et une pompe de dosage d'eau (30), que les échappements des deux pompes (30, 30) mènent à une chambre de mélange dans laquelle sont mélangés le liquide combustible et l'eau, qu'est raccordée à la chambre de mélange une pompe à haute pression (32) qui pompe le liquide jusqu'à une pression d'au moins 350 bar et qu'en aval de la pompe à haute pression (32) est installé le dispositif de vaporisation (34) dans lequel se vaporise le mélange liquide et que le mélange vapeur de combustible-vapeur d'eau est à disposition à une température d'au moins environ 450 °C avec modification de sa composition moléculaire au niveau de la soupape d'injection (36).
